# EUROPEAN PATENT APPLICATION

(11) **EP 4 625 308 A1**
(43) Date of publication of application: **01.10.2025**
(21) Application number: 25165132.9
(22) Date of filing: 20.03.2025
(51) Int. Cl.: G06T 5/60, G06T 5/70, G06T 3/4046, G06T 3/4053

(54) **LEARNING APPARATUS, IMAGE PROCESSING APPARATUS, METHOD OF CONTROLLING THE LEARNING APPARATUS, METHOD OF CONTROLLING THE IMAGE PROCESSING APPARATUS, AND PROGRAMS**

(30) Priority: 26.03.2024 JP 2024050301
(71) Applicant: CANON KABUSHIKI KAISHA, Tokyo 146-8501 (JP)
(72) Inventor: TSUNODA, Takamasa, Tokyo, 146-8501 (JP)
(74) Representative: Canon Europe Limited

(57) **Abstract**

A learning apparatus includes conversion control means that controls an occurrence frequency depending on a level of a first conversion process as a subject included in one or more conversion processes to be performed on a first image for learning; model processing means that inputs a second image obtained by performing the conversion processes on the first image to a model trained based on machine learning and causes the model to output a third image obtained by performing image processing on the second image; and loss calculation means that calculates a loss between the third image and the first image. A plurality of models having different image quality characteristics of the image processing are generated for each combination of the level and the occurrence frequency. A model corresponding to a designated image quality characteristic included in the plurality of models is applied to an image processing apparatus.

## Description

### BACKGROUND OF THE INVENTION

### Field of the Invention

The present disclosure relates to a learning apparatus, an image processing apparatus, a method of controlling the learning apparatus, and so forth.

### Description of the Related Art

Examples of image quality improvement processing to be performed on an input image include noise reduction (NR) processing of reducing noise included in the input image, super-resolution processing of increasing the resolution of the input image, and fog/haze removal processing of removing fog or haze from the input image. In recent years, a method of implementing the processing by a model trained based on machine learning has been proposed.

In many of the image quality improvement processing technologies using machine learning, an artificial degraded image is generated by modeling the process of image quality degradation and simulating the degradation for an image before degradation.

Then, supervised learning is performed using the degraded image as input data and the image before degradation as a ground truth (GT or correct answer value), and the image quality improvement processing is performed by the model obtained by the learning.

Pre-Trained Image Processing Transformer, CVPR-2021 (2021) reports that when multi-task learning of learning a plurality of kinds of image quality improvement tasks is performed with a large-scale model, high generalization performance is obtained for a plurality of kinds of image quality improvement processing, and high performance is exhibited in transfer learning. Moreover, this report reports that, in NR which is one of tasks learned as initial learning, an unlearned noise level is evaluated using verification data, and a high peak signal-to-noise ratio (PSNR) is exhibited as compared with a method of related art.

In other words, in a task in which the degradation process is modeled and the degree of degradation can be continuously controlled, the sufficiently trained machine learning model obtains the generalization performance and outputs a processing result similar to that of the learned region even for the unlearned region.

In many image quality improvement tasks such as NR and super-resolution, the strength of the image quality improvement effect and the sharpness are in a trade-off relationship, and a technology that enables adjustment of the balance between the sharpness and the image quality improvement effect and a technology that achieves both the sharpness and the image quality improvement effect by complicating the model have been proposed.

ESRGAN: Enhanced Super-Resolution Generative Adversarial Networks, ECCV 2018 workshop (2018) reports an example in which, in super-resolution, two models, a PSNR-enhanced model and a generative adversarial networks (GAN)-based model, are trained, and the image quality is adjusted by network interpolation that averages parameters of both models with weighting. EEMEFN: Low-light image enhancement via edge-enhanced multi-exposure fusion network, AAAI-20 (2020) reports an example of a model capable of optimizing the exposure for each region of an image and further improving the sharpness in a task of improving the image quality of a low-illuminance captured image.

### SUMMARY OF THE INVENTION

In the technologies of related art, however, in order to implement multi-task learning of a model capable of controlling the effect of image processing, such as the image quality improvement model capable of controlling the image quality improvement effect exemplified above, a complicated procedure is requested, and the calculation cost of learning tends to increase.

The present disclosure implements learning of a model capable of controlling the effect of image processing in a more desirable aspect.

The present disclosure in its first aspect provides a learning apparatus as specified in claim 1. Optional features are specified in claims 2 to 5 or specified or derivable from claims 7 to 11.

The present disclosure in its second aspect provides an image processing apparatus as specified in claim 6. Optional features are specified in claims 7 to 11 or specified or derivable from claims 2 to 5.

The present disclosure in its third aspect provides a method of controlling a learning apparatus as specified in claim 12. Optional features may be specified in or derivable from claims 2 to 5 or 7 to 11.

The present disclosure in its fourth aspect provides a method of controlling an image processing apparatus as specified in claim 13. Optional features may be specified in or derivable from claims 2 to 5 or 7 to 11.

The present disclosure in its fifth aspect provides a program for causing a computer to function as a learning apparatus as specified in claim 14. Optional features may be specified in or derivable from claims 2 to 5 or 7 to 11.

The present disclosure in its sixth aspect provides a program for causing a computer to function as an image processing apparatus as specified in claim 15. Optional features may be specified in or derivable from claims 2 to 5 or 7 to 11.

Further features of the present invention will become apparent from the following description of embodiments with reference to the attached drawings.

### BRIEF DESCRIPTION OF THE DRAWINGS

Fig. 1 is a diagram illustrating an example of a hardware configuration of a learning apparatus and an image processing apparatus.
Figs. 2A to 2D are diagrams illustrating examples of functional configurations of the learning apparatus and the image processing apparatus.
Figs. 3A to 3C are flowcharts presenting examples of processing of the learning apparatus and the image processing apparatus.
Figs. 4A to 4C are diagrams illustrating examples of functional configurations of the learning apparatus and the image processing apparatus.
Fig. 5 is a diagram illustrating an example of a neural network.
Figs. 6A and 6B are diagrams illustrating examples of functional configurations of the learning apparatus and the image processing apparatus.
Figs. 7A and 7B are flowcharts presenting examples of processing of the learning apparatus and the image processing apparatus.
Fig. 8 is a view illustrating an example of a user interface (UI) of the image processing apparatus.

### DESCRIPTION OF THE EMBODIMENTS

Hereinafter, desirable embodiments of the present disclosure will be described in detail with reference to the accompanying drawings.

In the specification and the drawings, identical reference signs are given to components having substantially identical functional configurations, and redundant description thereof will be omitted.

### First Embodiment

A first embodiment of the present disclosure will be described below. In the present embodiment, various descriptions will be given by taking, as an example, noise reduction (NR) processing in which a degraded image degraded due to noise is input and an image with the noise reduced is estimated. The NR described in the present embodiment is implemented by using a machine learning model trained by supervised learning. Hereinafter, sharpness, a learning method of a machine learning model, and processing at runtime will be described.

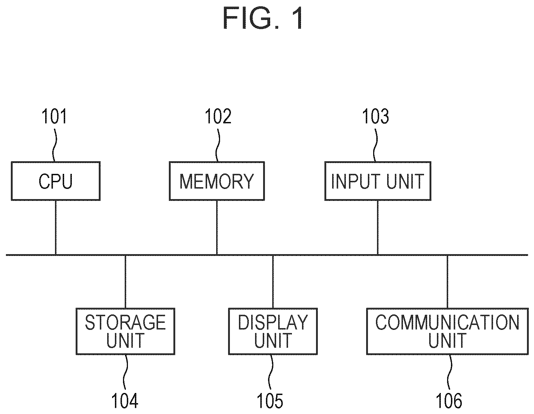

First, an example of hardware configurations of a learning apparatus 1000 and an image processing apparatus 1100 according to the present embodiment will be described with reference to Fig. 1. The learning apparatus 1000 and the image processing apparatus 1100 can have hardware configurations similar to each other, and hence the description will be given focusing on the configuration of the learning apparatus 1000. The learning apparatus 1000 can be constituted by a general-purpose information processing apparatus including a central processing unit (CPU) 101, a memory 102, an input unit 103, a storage unit 104, a display unit 105, a communication unit 106, and so forth.

The CPU 101 is a central arithmetical unit that controls various operations of the learning apparatus 1000. The memory 102 is a main storage memory of the CPU 101 and is used as a work area or a temporary storage area for loading various programs. The storage unit 104 is a storage area that stores various programs and data.

The input unit 103 is an input interface for the learning apparatus 1000 to receive an instruction from a user, and can be implemented by, for example, various operation devices such as a pointing device, a touch panel, and a keyboard.

The display unit 105 is an output interface for the learning apparatus 1000 to present various kinds of information to the user, and can be implemented by, for example, a display device such as a display that presents information to the user by displaying various kinds of display information, a screen, or the like.

The communication unit 106 is a communication interface for the learning apparatus 1000 to connect to various networks such as the Internet and a local area network (LAN). The configuration of the communication unit 106 may be appropriately changed in accordance with the type of network to be connected.

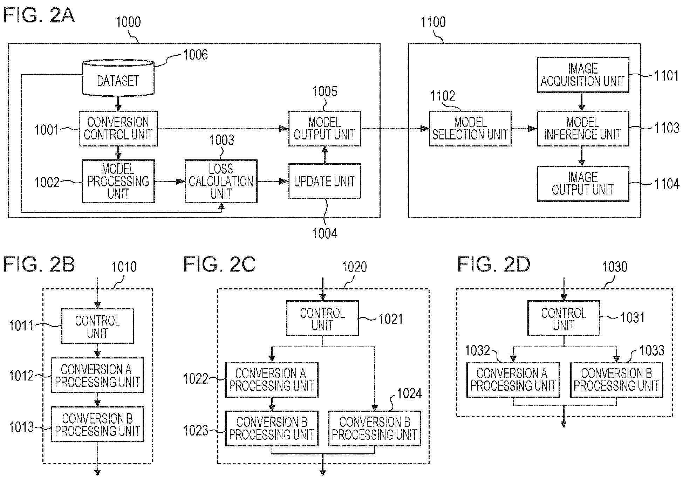

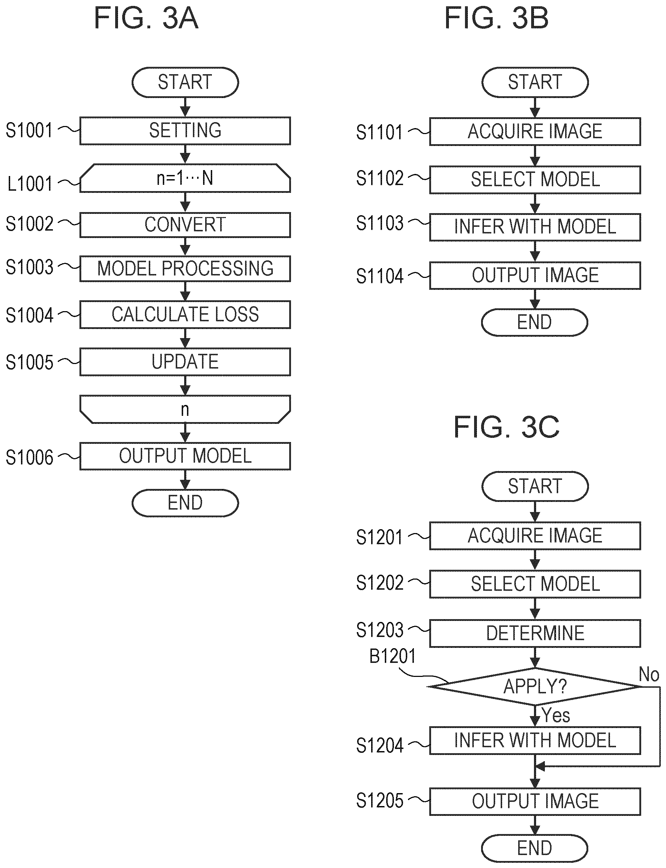

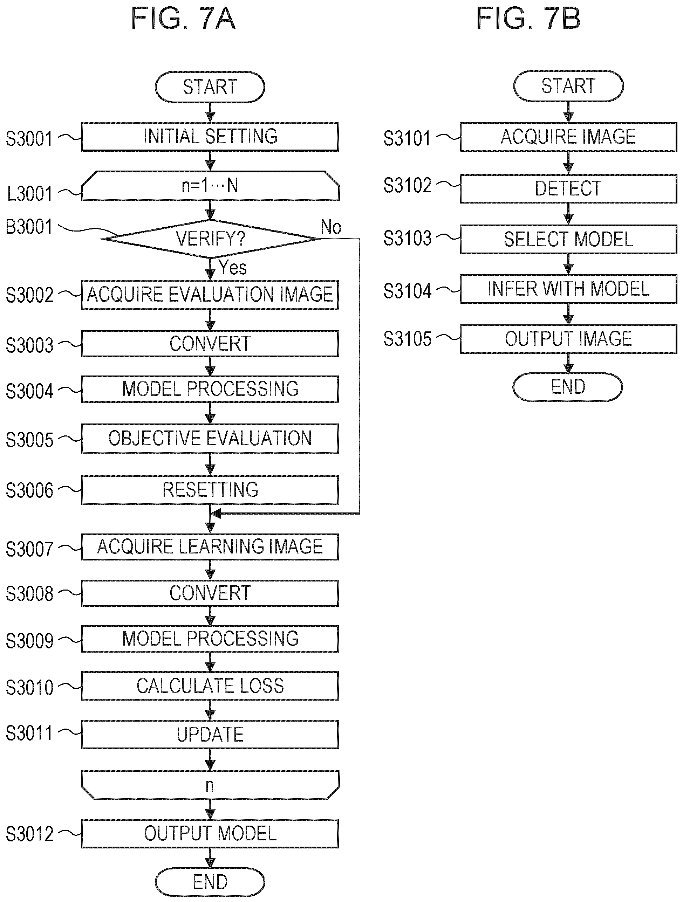

The CPU 101 loads a program stored in the storage unit 104 into the memory 102 and executes the program, thereby implementing functional configurations, which will be described later with reference to Figs. 2A to 2D, Figs. 4A to 4C, Figs. 6A and 6B, and so forth, and processing, which will be described later with reference to Figs. 3A to 3C, Figs. 7A and 7B, and so forth.

Examples of functional configurations of the learning apparatus 1000 and the image processing apparatus 1100 according to the present embodiment will be described with reference to Fig. 2A. The learning apparatus 1000 includes a conversion control unit 1001, a model processing unit 1002, a loss calculation unit 1003, an update unit 1004, and a model output unit 1005. The learning apparatus 1000 includes a dataset 1006 as a storage device.

The image processing apparatus 1100 includes an image acquisition unit 1101, a model selection unit 1102, a model inference unit 1103, and an image output unit 1104.

The details of the above-described components will be described later together with processing of the learning apparatus 1000 and the image processing apparatus 1100. The conversion control unit 1001 and the model inference unit 1103 may have other forms, which will be described later separately from the present form.

An example of the processing of the learning apparatus 1000 will be described focusing on processing related to learning of a model with reference to Fig. 3A together with the functional configuration of the learning apparatus 1000 illustrated in Fig. 2A.

In step S1001, the conversion control unit 1001 sets the level and the occurrence frequency of image conversion. In the image conversion, two kinds of processing, i.e., noise addition and smoothing, are performed. In the present embodiment, it is assumed that Gaussian noise is used for the noise addition. The intensity of Gaussian noise can be controlled using a standard deviation σ (noise level).

Here, an aspect of the conversion control unit 1001 illustrated in Fig. 2A will be described with reference to Fig. 2B. A conversion control unit 1010 illustrated in Fig. 2B is an example of the configuration of the conversion control unit 1001 illustrated in Fig. 2A. The conversion control unit 1010 includes a control unit 1011, a conversion A processing unit 1012, and a conversion B processing unit 1013.

In the form illustrated as the conversion control unit 1010, the control unit 1011 controls the level and the occurrence frequency of the image conversion, that is, the noise level σ of the Gaussian noise and the occurrence frequency thereof in step S1001.

In general, the occurrence frequency is set with regard to what noise level of an image is set as a NR subject at runtime. For example, when an image with σ = 30 to 50 is set as the NR subject, a range including the outside of the NR subject is set with an equal probability or a probability proportional to the magnitude of σ, such as σ = 30 to 50 or σ = 25 to 55.

In contrast, in the present embodiment, it is assumed that a noise level that is sufficiently smaller than the noise level of the NR subject of the machine learning model at runtime is learned.

For example, in an example of a case where σ is discretely changed, σ = 1, 30, 40, and 50 are generated at the occurrence frequencies of p = 0.08, 0.15, 0.31, and 0.46. That is, σ = 1 is generated with a probability of 0.08, σ = 30 is generated with a probability of 0.15, σ = 40 is generated with a probability of 0.31, and σ = 50 is generated with a probability of 0.46. In an example of a case where σ is continuously changed, the occurrence frequency of σ is controlled using two uniform distributions, i.e., a uniform distribution in a range of σ = 0.5 to 1.5 and a uniform distribution in a range of σ = 30 to 50. In this case, it is assumed that the magnitude of each integral value can be controlled so that the sum of the integral values of the two uniform distributions is kept at 1.

As described above, the control unit 1011 sets the noise level including the noise level sufficiently smaller than that of the NR subject of the machine learning model, and further sets the occurrence frequency thereof. That is, the control unit 1011 also sets the occurrence frequency for degradation not subjected to degradation recovery by the machine learning model (for example, noise not subjected to the NR) among degradation which may be generated in the image (in other words, degradation to be added to the image by a conversion process to be described later). The conversion A processing unit 1012 and the conversion B processing unit 1013 will be described later together with the contents of the subsequent processing.

Loop L1001 is a loop related to iteration for learning of the machine learning model (hereinafter, also referred to as a learning loop). In the present embodiment, it is assumed that a neural network is applied as the machine learning model, and learning is performed by a stochastic gradient descent method. That is, it is assumed that a mini-batch of learning images is sampled at random from the dataset, a loss is calculated for each mini-batch, and the model parameter of the neural network is updated. Here, it is assumed that the learning image is stored in the dataset as a GT image without degradation (or with sufficiently little degradation). In the subsequent processing, it is assumed that a copy of the GT image of the learning image is created, then the image conversion is performed on the copy, and the GT image of the copy source is used in loss calculation in the processing in step S1004.

The learning image (in other words, the GT image) corresponds to an example of a first image.

In step S1002, the conversion control unit 1001 performs the image conversion on the learning image. Here, an example of a case where the conversion control unit 1010 illustrated in Fig. 2B is applied as the conversion control unit 1001 will be described. The conversion A processing unit 1012 performs noise addition to the input image. The conversion B processing unit 1013 performs smoothing on the input image.

The noise to be added to the input image by the conversion A processing unit 1012 is controlled using the noise level and the probability set in step S1001. As a specific example, in a case where the size of the mini-batch is 4, when the four learning images apply σ = 30, 40, 50, and 50, the noise addition is performed to the learning images at the noise levels of σ = 30, 40, 50, and 50.

In the present embodiment, the smoothing performed on the input image by the conversion B processing unit 1013 is performed with a constant parameter. The smoothing processing to be applied is not particularly limited. For example, a Gaussian filter or a median filter may be applied.

Although the example of the case where the form illustrated in Fig. 2B is applied to the processing related to the setting of the level and the occurrence frequency of the image conversion presented in step S101 and the processing related to the image conversion presented in step S102 has been described above, without being limited to this form, other forms can also be applied.

For example, a conversion control unit 1020 illustrated in Fig. 2C and a conversion control unit 1030 illustrated in Fig. 2D are examples of other forms of the conversion control unit 1001 illustrated in Fig. 2A.

The conversion control unit 1020 applies conversion processes in which a conversion A processing unit 1022 (noise addition) and a conversion B processing unit 1023 (smoothing) sequentially execute processing, and a conversion process in which only a conversion B processing unit 1024 (noise addition) executes processing. In this case, for example, when there are four options of noise levels in step S1001, that is, no noise, σ = 30, σ = 40, and σ = 50, the conversion process executed by only the conversion B processing unit 1024 corresponds to the processing corresponding to no noise. In the present embodiment, while the noise level is set to include the noise level sufficiently smaller than that of the NR subject of the machine learning model, it is assumed that the noise level sufficiently smaller than that of the NR subject includes "no noise" as described above.

The conversion control unit 1030 applies a conversion process in which only a conversion A processing unit 1032 (noise addition) executes processing and a conversion process in which only a conversion B processing unit 1033 (smoothing) executes processing. In the above-described example of the processing in step S1002, the example of the case has been described where the smoothing by the conversion B processing unit 1013 is applied after the noise addition by the conversion A processing unit 1012. Alternatively, only the noise addition may be applied. For example, it is assumed that no noise, σ = 30, σ = 40, and σ = 50 are set as the options of the noise level. In this case, when one of σ = 30, 40, and 50 is selected, the processing by the conversion A processing unit 1032 may be applied, and when no noise is selected, the processing by the conversion B processing unit 1033 may be applied.

The image obtained by performing the conversion processes on the learning image corresponds to an example of a second image. In the conversion processes, the processing of the noise addition by the conversion A processing unit 1012 corresponds to an example of a first conversion process, and the smoothing processing by the conversion B processing unit 1033 corresponds to an example of a second conversion process.

Further, the conversion control unit 1010, the conversion control unit 1020, and the conversion control unit 1030 perform the processing on the learning image in the learning loop. Alternatively, a configuration may be applied in which the processing is performed on the learning image in advance and the processed image is stored in the dataset.

In this case, for example, the conversion control unit 1001 sets the level and the occurrence frequency of the image conversion in step S1001. Then, in step S1002, the conversion control unit 1001 may determine the level for each learning image, and acquire a learning image subjected to a conversion process suitable for the level in advance, from the dataset.

As another example, the conversion control unit 1001 sets the level and the occurrence frequency of the image conversion in step S1001. Then, the conversion control unit 1001 determines the level for a series of learning images based on the set level and occurrence frequency, performs the conversion processes, and stores the conversion result in the dataset. Then, in step S1002, the conversion control unit 1001 may acquire the converted learning image stored in the dataset.

In step S1003, the model processing unit 1002 inputs the learning image subjected to the conversion processes and acquired in step S1002 to the machine learning model, and causes the machine learning model to perform image processing (noise reduction processing) on the learning image subjected to the conversion processes. A model for performing the noise reduction processing on an input image is implemented as a neural network. In the processing of step S1003, the neural network executes forward propagation processing of receiving the learning image subjected to the conversion processes in step S1002 as an input and outputting an image having the same size subjected to the image processing (noise reduction processing).

The image obtained by performing the image processing (noise reduction processing) using the model on the learning image subjected to the conversion processes in step S1002 as an input corresponds to an example of a third image.

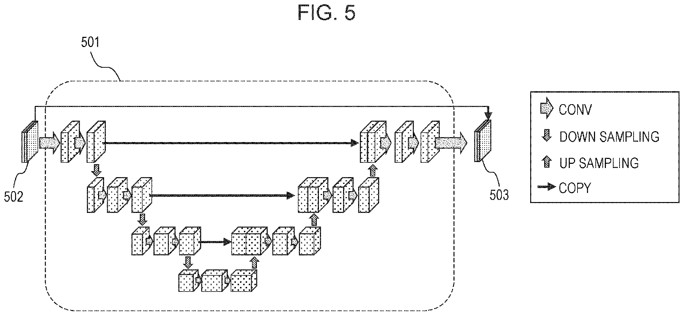

An example of the neural network applied in the present embodiment will be described with reference to Fig. 5. A neural network 501 illustrated in Fig. 5 is an example of a network having an UNet structure. The UNet includes a convolution layer, an activation layer, a pooling layer (down sampling layer), an up sampling layer, and so forth, and has a structure in which the feature amounts of intermediate layers are skip-connected on the input side and the output side of the same hierarchy. It is assumed that an input image 502 and an output image 503 are images having the same resolution.

Here, Fig. 3A is referred to again. In step S1004, the loss calculation unit 1003 calculates a loss based on the GT image of the learning image and the image on which the model processing has been performed in step S1003. As the loss function, for example, a loss generally used in an image processing task, such as L1 loss, L2 loss, or Charbonnier loss, can be applied. In addition, for example, normalization such as total variation normalization may be used for an image on which the model processing has been performed. When there are a plurality of losses, the losses may be combined with appropriate weights and then used as the final loss.

In the present embodiment, the noise level sufficiently smaller than that of the noise level of the NR subject of the machine learning model at runtime in step S1001 is also learned. For example, when conversion of no noise is performed on a certain learning image, a loss is calculated between an image subjected to only the smoothing processing and the GT image without degradation. This case represents that the loss is reduced when processing of further sharpening the smoothed image is performed by the model. In addition, in a learning image in which the noise addition at σ = 30 and the smoothing have been performed or the noise addition at σ = 50 and the smoothing have been performed, the loss is reduced when processing of further sharpening the input image while reducing the noise is performed by the model.

As σ is larger, degradation due to the noise addition is more dominant between the noise addition and the smoothing, and the noise reduction is learned more strongly. Further, when the smoothing is not performed, such as when only the noise addition at σ = 50 is applied, the noise reduction is learned more strongly.

In contrast, when σ is sufficiently small, learning of sharpness enhancement for sharpening an image is performed. As described above, when the occurrence frequency of the noise addition with the sufficiently small σ including "no noise" is increased, the learning of the sharpness enhancement occurs frequently, and when the occurrence frequency of the noise addition with a large σ including "no smoothing" is increased, learning in which the noise reduction is more dominant occurs frequently.

In contrast, as disclosed in Pre-Trained Image Processing Transformer, CVPR-2021 (2021), the sufficiently trained machine learning model is considered to acquire generalization performance and perform similar output even in the unlearned region. In a model that has learned a large number of cases where σ is sufficiently small, together with learning in a case where σ is large, the learning of the sharpness enhancement is also performed. Hence it is possible to obtain NR with high sharpness when a noisy image with a large σ is input at inference using the trained model. That is, the effect of the learning of the sharpness enhancement is generalized, and the sharpness is enhanced at a series of noise levels regardless of the noise level of the input image. In conclusion, by controlling the occurrence frequency of the noise addition with the sufficiently small σ including "no noise", it is possible to adjust the sharpness in the learning of the noise reduction.

In step S1005, the update unit 1004 determines the update amount of the parameter of each layer of the model by an error backward propagation learning method based on the loss calculated in step S1004, and updates the parameter of the model.

The series of processing from step S 1002 to step S 1005 described above corresponds to processing for one iteration in the learning loop. The loop processing indicated by the loop L1001 may apply control to be terminated when the number of iterations after learning has reached a threshold set in advance. As another example, control may be applied such that verification data for verifying the learning result of a model is prepared, a loss is evaluated based on the verification data for every predetermined number of iterations, and loop processing is terminated when the evaluation result of the loss satisfies a predetermined condition.

In step S1006, the model output unit 1005 outputs the model with the learning completed (trained model).

The trained model output at this time is associated with the level and the occurrence frequency of the conversion set by the conversion control unit 1001. For the level and the occurrence frequency of the conversion, the image quality characteristic depending on the model may be verbally implied to characterize the sharpness of the model processing result.

For example, it is assumed that there is a model having high NR effect trained with σ = 30, 40, and 50 at p = 0.17, 0.33, and 0.5, but not trained with the sufficiently small σ. In addition, it is assumed that there is a model trained with σ = 1, 30, 40, and 50 at p = 0.08, 0.15, 0.31, and 0.46, that is, a model having high sharpness trained even with the sufficiently small σ. In this case, the model may be output after the former model is set to "high NR effect, low sharpness" and the latter model is set to "low NR effect, high sharpness".

As described above, a plurality of trained models having different image quality characteristics of image processing to be performed on an input are generated in accordance with the level and the occurrence frequency of the conversion set by the conversion control unit 1001.

The example of the processing of the learning apparatus 1000 according to the present embodiment has been described above with reference to Figs. 2A and 3A. By the above-described series of processing, the parameter of the model used at runtime is learned.

Next, an example of the processing of the image processing apparatus 1100 will be described focusing on processing at runtime with reference to Fig. 3B together with the functional configuration of the image processing apparatus 1100 illustrated in Fig. 2A.

In step S1101, the image acquisition unit 1101 acquires an image to be processed. For example, the image acquisition unit 1101 may acquire an image corresponding to an image capturing result by a predetermined image capturing device as the image to be processed. In this case, the image capturing device may be an image capturing device built in the image processing apparatus 1100 or an image capturing device connected via a propagation path such as a cable or a network. Further, since the image processing apparatus 1100 according to the present embodiment performs NR on an input image, an image degraded due to noise may be applied as the input image.

In general, the image capturing device acquires an image as image data on a Bayer array, and performs development processing such as de-Bayer, white balance correction, gamma correction, and so forth. In addition, the image capturing device may further incorporate NR processing using a spatial filter, cyclic processing, or the like. The processing of the image capturing device is assumed to meet the learning conditions of the model.

For example, it is assumed that, when the NR processing using the spatial filter is applied, processing that meets the processing in the camera is applied at learning, such as application of the smoothing processing after the noise addition in the conversion processes at learning presented in step S1002 of Fig. 3A.

In step S1102, the model selection unit 1102 selects a trained model to be applied to perform the NR on the input image. It is assumed that the processing at learning has been performed, and two models, that is, a "low NR effect, high sharpness" model having high sharpness and a "high NR effect, low sharpness" model having high NR effect have been trained. Here, it is assumed that the two models are switched in accordance with a request of image capturing. For example, when an image with high sharpness is requested, such as when characters of an object are to be visually recognized, the model having high sharpness is selected. When an image from which noise has been more effectively removed is requested, such as when fatigue is to be less felt in viewing, the model having high NR effect is selected.

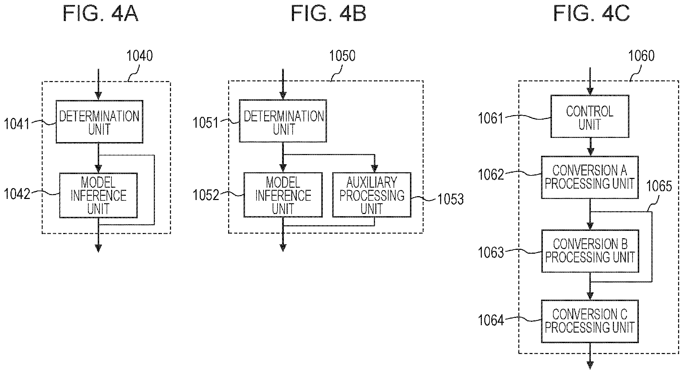

In step S1103, the model inference unit 1103 executes inference processing on the image acquired in step S1101 using the model selected in step S1102. A plurality of forms can be applied to the model inference unit 1103 illustrated in Fig. 2A. Figs. 4A and 4B are diagrams illustrating examples of the form of the model inference unit 1103.

An example of the processing of the model inference unit 1103 will be described with reference to Fig. 3C, which presents an example of a case where an inference unit 1040 illustrated in Fig. 4A and an inference unit 1050 illustrated in Fig. 4B are applied. The processing of steps S1201, S1202, S1204, and S1205 presented in Fig. 3C are substantially the same as the processing of steps S1101, S1102, S1103, and S1104 presented in Fig. 3B, and hence the detailed description thereof will be omitted.

In step S1203, a determination unit (a determination unit 1041 illustrated in Fig. 4A or a determination unit 1051 illustrated in Fig. 4B) determines whether the image acquired in step S1101 is an application subject of the inference processing using the model.

In the present embodiment, the NR processing is applied to the acquired image. However, when the image includes almost no noise, the image is excluded from the application subject of the NR processing in order to avoid an excessive increase in calculation cost due to the application of the inference processing using the model. That is, control is performed such that the NR processing is applied when the noise level of the acquired image is a predetermined level or more. Each of the determination units 1041 and 1051 checks the noise level of a subject image and determines whether to apply the NR processing to the subject image. The method of determining the noise level is not particularly limited. As a specific example, the determination may be made based on a parameter (sensitivity of an image sensor, a shutter speed, an aperture, or the like) at capturing the subject image, or may be made based on the result of analysis processing on the subject image.

In branch B1201, the determination unit switches subsequent processing in accordance with the result of the determination in step S1203. Specifically, when the determination unit determines that the acquired image is the subject of the NR processing in step S1203, the processing proceeds to step S1204. In this case, in step S1204, the model inference unit 1103 applies inference processing using the model to the subject image. That is, the model inference unit 1103 sets the subject image as an input image to the model and causes the model to execute the inference processing on the input image.

In contrast, when the determination unit determines that the acquired image is not subjected to the NR processing in step S1203, the processing proceeds to S1205. In this case, the processing in step S1204 is skipped.

The noise level to be subjected to the NR processing is related to the level and the occurrence frequency of the image conversion set in the processing in step S1001 of Fig. 3A in the processing at learning.

In step S1001, the noise level is set assuming the use at runtime. For example, when learning is performed with the noise level set to σ = 30 to 50, the noise level σ of about 30 or more is subjected to the NR processing in step S1204. When there is a specific request for the subject of the NR processing in the processing at runtime, it is assumed that the level and the occurrence frequency of the image conversion are set in step S1001 based on the noise level.

Control may be applied such that certain auxiliary processing is executed on the subject image even when the processing does not proceed to step S1204 at branch B1201. This processing is executed by, for example, an auxiliary processing unit 1053 of the inference unit 1050 illustrated in Fig. 4B.

The NR processing using the machine learning model generally requires high calculation cost. Even when the degree of degradation of the input image is such that the processing with high calculation cost is not required, certain auxiliary processing may be required. In such a case, light auxiliary processing may be executed instead of the processing using the machine learning model. An example of the light auxiliary processing is rule-based NR processing using a spatial filter.

Here, Fig. 3B is referred to again. In step S1104, the image output unit 1104 outputs an image corresponding to the result of the inference processing using the model in step S1103.

A plurality of forms are considered for the image output. As a specific example, the image processing apparatus 1100 may be connected to a monitor, and an image may be output to the monitor. As another example, when the image processing apparatus 1100 is connected to a network, an image may be output to the network. Accordingly, it is possible to output the image to another apparatus connected to the network, a network service on the network, or the like. As still another example, when the image processing apparatus 1100 includes a terminal for video transmission, an image may be output to a device connected via the terminal.

By applying the control described above, it is possible to implement the learning of the noise reduction processing with the sharpness controlled without using the loss function requiring calculation cost in the learning of the model.

### Modification of First Embodiment

In the above-described first embodiment, the technology according to the present embodiment has been described focusing on the example of the case where the noise reduction processing is applied to the subject image. However, image processing to which the technology can be applied is not limited to the noise reduction processing. For example, the technology according to the present embodiment can be applied to atmospheric fluctuation removal processing of removing atmospheric fluctuation generated in a moving image by image processing.

In the atmospheric fluctuation removal processing, degradation that artificially reproduces atmospheric fluctuation is given to an input image to create an artificial degraded image. In addition, the image before degradation may be used as a GT, and supervised learning may be performed so as to reconstruct the GT from the degraded image.

On the learning described above, by performing supervised learning while causing degradation due to atmospheric fluctuation and degradation due to smoothing to occur stochastically, an effect of improving the sharpness of the reconstructed image can be expected.

### Second Embodiment

A second embodiment of the present disclosure will be described below. In the above-described first embodiment, the example of the case has been described where the two models with the different levels and the different occurrence frequencies of the image conversion are trained and one of the models is selected at runtime. In contrast, a configuration may be applied in which a plurality of patterns of the level and the occurrence frequency of the image conversion are prepared, and the user selects one of models trained with the plurality of patterns via a user interface (UI) at runtime. In the present embodiment, an example of a case will be described where models are trained for four patterns in which the level and the occurrence frequency of the image conversion are changed, and an application subject is switched from among the models by designation from the user via the UI at runtime.

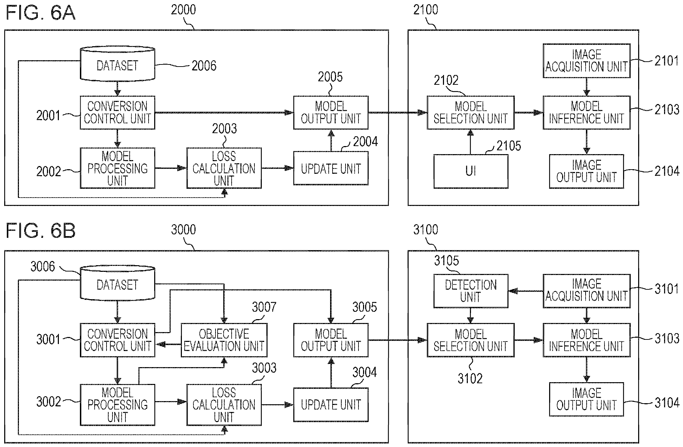

An example of functional configurations of a learning apparatus 2000 and an image processing apparatus 2100 according to the present embodiment will be described with reference to Fig. 6A. The learning apparatus 2000 includes a conversion control unit 2001, a model processing unit 2002, a loss calculation unit 2003, an update unit 2004, and a model output unit 2005. The learning apparatus 2000 includes a dataset 2006 as a storage device.

The image processing apparatus 2100 includes an image acquisition unit 2101, a model selection unit 2102, a model inference unit 2103, an image output unit 2104, and a UI 2105.

The details of the above-described components will be described later together with processing of the learning apparatus 2000 and the image processing apparatus 2100.

An example of the processing of the learning apparatus 2000 will be described focusing on processing related to learning of a model with reference to Fig. 3A together with the functional configuration of the learning apparatus 2000 illustrated in Fig. 6A.

The rough flow of the learning processing in the present embodiment is similar to that of the learning processing in the first embodiment described with reference to Fig. 3A. In the present embodiment, the processing of the learning apparatus 2000 will be described with reference to Fig. 3A, focusing on the differences from the first embodiment.

In step S1001, the conversion control unit 2001 controls the level and the occurrence frequency of the image conversion. In the present embodiment, the conversion control unit 2001 is assumed to create four models with the sharpness adjusted, and control the level and the occurrence frequency of the image conversion to have different four stages of sharpness. For example, it is assumed that the following four patterns of the level and the occurrence frequency are used in descending order of the sharpness.
1. Level: [no noise, 30, 40, 50]
Occurrence frequency: [2.0, 1.0, 2.0, 3.0]
2. Level: [no noise, 30, 40, 50]
Occurrence frequency: [1.0, 1.0, 2.0, 3.0]
3. Level: [no noise, 30, 40, 50]
Occurrence frequency: [0.5, 1.0, 2.0, 3.0]
4. Level: [no noise, 30, 40, 50]
Occurrence frequency: [0.0, 1.0, 2.0, 3.0]

However, it is assumed that the numerical values of the occurrence frequencies are normalized so that the sum of the numerical values is 1.0.

As described above, the higher the occurrence frequency of no noise, the higher the sharpness of the model, and the order of the sharpness can be controlled using the occurrence frequency of no noise.

Of the subsequent processing, the processing of each of loop L1001, and steps S1002, S1003, S1004, and S1005 is substantially the same as that in the first embodiment, and therefore the detailed description thereof will be omitted.

In step S1006, the model output unit 2005 outputs the model with the learning completed (trained model).

Here, it is assumed that the model output unit 2005 assigns numbers 1, 2, 3, and 4 to the four patterns of the level and the occurrence frequency set in step S1001 in descending order of the sharpness, and outputs each model.

The example of the processing of the learning apparatus 2000 according to the present embodiment has been described above with reference to Figs. 6A and 3A.

Next, an example of processing at runtime will be described. The rough flow of the processing at runtime in the present embodiment is similar to that of the processing at runtime in the first embodiment described with reference to Fig. 3B. In the present embodiment, the processing of the image processing apparatus 2100 will be described focusing on the differences from the first embodiment, with reference to Fig. 3B together with the functional configuration of the image processing apparatus 2100 illustrated in Fig. 6A.

In step S1101, the image acquisition unit 2101 acquires an image to be processed. The processing is substantially the same as that in the first embodiment, and the detailed description thereof will be omitted.

In step S1102, the model selection unit 2102 receives selection of a trained model from the user via the UI 2105.

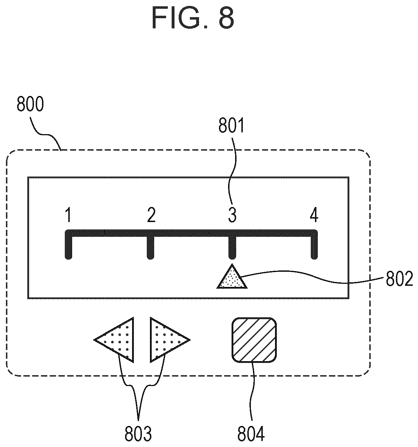

Here, an example of the UI for receiving the selection of the trained model from the user in the processing in step S1102 will be described with reference to Fig. 8.

A UI 800 includes a number line 801 on which a scale and numerical values are indicated, a marker 802 for designating a tick on the number line 801, a selection button 803, and a setting button 804. The numerical values on the scale correspond to the numbers of the models determined in the processing in step S1006, and a value 1 indicates the model having the highest sharpness and a value 4 indicates the model having the highest NR effect. When the position of the marker 802 is moved by the selection button 803, a tick on the number line 801 is designated. When the setting button 804 is pressed, the model corresponding to the numerical value indicated by the marker 802 is selected. That is, the UI 800 presents the numbers of the models to the user as options, and receives selection of any option from the user, thereby recognizing the model corresponding to the selected option (the number of the model) as the model selected by the user.

The model selected here is read into the image processing apparatus 2100 by the model selection unit 2102, resulting in a state in which inference processing can be performed by the selected model.

The four trained models correspond to the four patterns of the level and the occurrence frequency set in the processing in step S1001 of Fig. 3A. However, in this processing, the level and the occurrence frequency may be adjusted so that the UI 2105 and the intensity of the sharpness intuitively match. For example, since the scale of the UI has equally spaced ticks, the level and the occurrence frequency may be adjusted so that the intensity of the sharpness has also equally spaced values. As a specific example, the occurrence frequency of no noise may be adjusted for each model.

The processing in steps S1103 and S1104 is substantially the same as that of the first embodiment, and the detailed description thereof will be omitted.

By applying the control described above, the user can intuitively select a model using the UI.

### Third Embodiment

A third embodiment of the present disclosure will be described below. In the above-described first and second embodiments, the level and the occurrence frequency of the image conversion are manually set to control the intensity of the sharpness. In contrast, the intensity of the sharpness can be automatically controlled based on an evaluation value by introducing an objective evaluation index.

In the above-described first and second embodiments, a model is selected in advance or the user selects a model via the UI. In contrast, by performing detection processing for a predetermined subject on an input image, a model can be automatically selected based on the result of the detection processing.

In the present embodiment, an example of a case where the control of the sharpness and the model selection are automated in this way will be described.

The control of the sharpness relates to processing at learning, and the automation of the model selection relates to processing at runtime. Hereinafter, the processing at learning and the processing at runtime will be described. The former will be described mainly focusing on the portion related to the control of the sharpness. The latter will be described mainly focusing on the portion related to the automation of the model selection.

An example of functional configurations of a learning apparatus 3000 and an image processing apparatus 3100 according to the present embodiment will be described with reference to Fig. 6B.

The learning apparatus 3000 includes a conversion control unit 3001, a model processing unit 3002, a loss calculation unit 3003, an update unit 3004, a model output unit 3005, and an objective evaluation unit 3007. The learning apparatus 3000 includes a dataset 3006 as a storage device.

The image processing apparatus 3100 includes an image acquisition unit 3101, a model selection unit 3102, a model inference unit 3103, an image output unit 3104, and a detection unit 3105.

An example of processing of the learning apparatus 3000 will be described focusing on processing related to learning of a model with reference to Fig. 7A together with the functional configuration of the learning apparatus 3000 illustrated in Fig. 6B. In the present embodiment, an example of the processing of the learning apparatus 3000 will be described particularly focusing on the differences from the first embodiment.

In step S3001, the conversion control unit 3001 sets initial values of the level and the frequency of image conversion. The setting contents in this processing are substantially the same as the contents described for the processing in step S1001 of Fig. 3A in the first embodiment. In the present embodiment, the level and the frequency of the image conversion set in step S3001 are updated during the learning of the model.

Loop L3001 corresponds to a learning loop similar to the learning loop (loop processing indicated by loop L1001 in Fig. 3A) of the first embodiment. The learning loop may be terminated when the number of iterations after learning has reached a threshold set in advance, or the loop processing may be terminated in the middle of the loop processing regardless of the number of iterations when a predetermined termination condition has been satisfied.

In branch B3001, the conversion control unit 3001 advances the processing to step S3002 at intervals of a predetermined number of iterations, and advances the processing to step S3007 in the case of other numbers of iterations. Thus, a series of processing from step S3002 to step S3006, which will be described later, is executed at intervals of the predetermined number of iterations. The predetermined number of iterations can be desirably selected to be, for example, several thousands or several tens of thousands, and is desirably set to a frequency at which a series of processing from step S3002 to step S3006 is executed a plurality of times until the learning of the model is completed.

In step S3002, the objective evaluation unit 3007 acquires an evaluation image used for objective evaluation from the dataset 3006.

The evaluation value applied to the objective evaluation is an evaluation value calculated based on a physical quantity of an image. In image processing, PSNR, structural similarity (SSIM), and modulation transfer function (MTF) are exemplified. The PSNR is an index correlated with the reproducibility of pixel values, and tends to be relatively hardly influenced by the sharpness. Even in an image with low sharpness, a high PSNR is exhibited when the pixel values are close to those of the GT. Thus, the PSNR is widely used as an index for quantifying the NR effect. The SSIM is an index correlated with the reproducibility regarding the structure in addition to the pixel values, and tends to be relatively easily influenced by the sharpness. The MTF is evaluated using a chart, is an index for evaluating the resolution of an image, and tends to be strongly influenced by the sharpness.

In the present embodiment, the above-exemplified index is used as the objective evaluation index. Since a dedicated chart is used for the MTF, the chart is acquired in the processing in step S3002. Also, although the PSNR and SSIM are not particularly specified, certain charts are assumed to be used, and in the processing in step S3002, the chart for the PSNR or SSIM is acquired.

In step S3003, the conversion control unit 3001 performs image conversion on the image acquired in step S3002. The processing contents of the image conversion are similar to the processing contents of the image conversion described as the processing in step S1002 of Fig. 3A in the first embodiment. However, at this time, one or more fixed values (for example, σ = 30, 50) are set as the noise level for noise addition, and the enabling/disabling of smoothing is also fixed. Then, converted images are generated for the number of combinations of the noise level of the noise addition and the enabling/disabling of the smoothing.

In step S3004, the model processing unit 3002 inputs the converted image generated in step S3003 to a machine learning model and causes the machine learning model to perform image processing (noise reduction processing) on the converted image. That is, image processing by the machine learning model is performed on the image subjected to the image conversion with the chart for the PSNR, SSIM, or MTF described above.

The other processing contents are substantially the same as the processing contents described as the processing in step S1003 of Fig. 3A in the first embodiment.

In step S3005, the objective evaluation unit 3007 evaluates the image subjected to the image processing by the machine learning model in step S3004, that is, the result of the model processing with the chart for the PSNR, SSIM, or MTF, using the objective evaluation index. When the PSNR or SSIM is applied, an evaluation value (scalar value) is obtained by applying the processing result obtained in step S3004 and the GT to an evaluation expression. When the MTF is applied, an evaluation value is obtained by applying processing based on a predetermined evaluation method to the processing result of the machine learning model. When there are a plurality of images subjected to the image conversion, an evaluation value for each of the plurality of images is obtained.

In step S3006, the conversion control unit 3001 resets the level and the occurrence frequency of the image conversion based on the objective evaluation value acquired in step S3005.

Among the above-described series of evaluation values, in particular, the MTF tends to have a high correlation with the sharpness. Thus, for example, control may be applied such that a target value is set for the MTF, the occurrence frequency of no noise contributing to the control of the sharpness is increased when the MTF has not reached the target value, and the occurrence frequency is not changed when the MTF has reached the target value. Control may be applied to further reduce the frequency of no noise when the MTF indicates a value larger than the target value.

Since the MTF is expressed by a curve, for example, a target value may be set for an integrated value obtained by integration for a predetermined frequency section, or a target value may be set by focusing on a predetermined frequency.

In step S3003, when a plurality of converted images are created according to combinations of the noise addition of the plurality of noise levels and the enabling/disabling of the smoothing, a target value may be set for each conversion pattern. In this case, it is determined whether the target value has been achieved for each pattern, a rule is created with regard to the noise level of the unachieved pattern, the unachieved range, or the like, and the occurrence frequency of no noise may be adjusted based on the rule.

Further, an index other than the MTF may be used in combination. For example, the PSNR and SSIM are effective as indices of the NR effect. Thus, for example, control may be applied such that target values are set for the PSNR and SSIM, and the occurrence frequency of the predetermined noise level σ is increased when these indices have not reached the target values. Further, control may be applied such that the noise level and the occurrence frequency are adjusted based on a predetermined rule, as in the case of the MTF, when a plurality of converted images are created in accordance with combinations of the noise addition of the plurality of noise levels and the enabling/disabling of the smoothing.

In step S3007, the loss calculation unit 3003 acquires a learning image from the dataset 3006. The method of acquiring the learning image is similar to the acquiring method described as the loop processing in loop L1001 presented in Fig. 3A in the first embodiment. The processing from step S3008 to step S3012 is substantially the same as the processing from step S1002 to step S1006 presented in Fig. 3A except that the main components are the conversion control unit 3001, the model processing unit 3002, the loss calculation unit 3003, the update unit 3004, and the model output unit 3005. Thus, the detailed description of the processing will be omitted.

By applying the above-described control, it is possible to implement the automation of the control of the sharpness at learning of the model.

Next, an example of the processing performed by the image processing apparatus 3100 will be described focusing on processing at runtime with reference to Fig. 7B together with the functional configuration of the image processing apparatus 3100 illustrated in Fig. 6B. In the present embodiment, an example of the processing of the image processing apparatus 3100 will be described particularly focusing on the differences from the first embodiment.

In step S3101, the image acquisition unit 3101 acquires an image to be processed. This processing is substantially the same as the processing in step S1101 of Fig. 3B in the first embodiment.

In step S3102, the detection unit 3105 performs object detection on the image acquired in step S3101. The result of the object detection is used for switching between the model having high sharpness and the model having high NR effect. Thus, in the object detection, for example, an object for which higher sharpness is requested than other objects is set as a detection subject. Examples of the detection subject include characters and human figures. Further, a configuration may be applied in which a detection subject can be desirably set in accordance with a request of the user.

In step S3103, the model selection unit 3102 selects a model based on the result of the object detection in step S3102.

As described above, the object for which higher sharpness is requested than the other objects is set as the detection subject. In view of such characteristics, the model selection unit 3102 may select the model having high sharpness when the detection subject is detected, and may select the model having high NR effect when the detection subject is not detected.

In contrast, since the object detection is performed on the image before the image quality improvement processing is performed, the detection accuracy of the object detection may be reduced due to the influence of noise or the like, and undetected frames may frequently appear. In view of such characteristics, when the image processing apparatus according to the present embodiment is applied to a moving image, model switching may frequently occur, and the user may feel uncomfortable when viewing the moving image. Thus, for example, by providing hysteresis to model switching (for example, providing hysteresis to the temporal frequency of the object detection), the occurrence of frequent model switching may be inhibited to stabilize the applied model. As a specific example, control may be applied such that, when a predetermined frame is detected in a certain temporal section, switching to the model having high sharpness is performed, and even when a detection subject is not detected for a while thereafter, the model is continuously used. Then, when a detection subject is not detected for a predetermined period or more, the model may be switched to the model having high NR effect.

The processing in steps S3104 and S3105 is executed by the model inference unit 3103 and the image output unit 3104. The processing is substantially the same as the processing in steps S1103 and S1104 of Fig. 3B in the first embodiment, and hence the detailed description thereof will be omitted.

By applying the control described above, it is possible to automate the switching of the model at runtime.

### Fourth Embodiment

A fourth embodiment of the present disclosure will be described below. In the above-described embodiments, for the noise reduction processing, the example of the case has been described where the technology according to the present disclosure is applied to the noise reduction processing of an image degraded due to Gaussian noise on the assumption of Gaussian noise for an RGB image (R stands for red, G stands for green, and B stands for blue). In contrast, in an image capturing device including a one-chip sensor, noise is added to RAW data of a Bayer array of RGGB, and an RGB image degraded due to the noise is generated through development processing such as de-Bayer, white balance correction, gamma correction, and so forth. The noise to be added to the RAW data includes a term proportional to the signal intensity of the RAW data and an offset term not proportional to the signal intensity, and is modeled as Poisson-Gaussian noise having these two terms. In the present embodiment, an example of a case will be described where the technology according to the present disclosure is applied to a pipeline of learning of a NR model using a noise model close to the actual noise.

The functional configurations of the learning apparatus and the image processing apparatus according to the present embodiment are substantially the same as the configurations at learning and the configurations at runtime described with reference to Fig. 2A in the first embodiment except for the points described later. Further, the processing of the learning apparatus and the image processing apparatus according to the present embodiment is also substantially the same as the processing at learning and the processing at runtime described with reference to Figs. 3A and 3B in the first embodiment except for the points described later.

The differences between the present embodiment and the first embodiment mainly correspond to the processing of the level and the occurrence frequency of the image conversion presented as step S1001 in Fig. 3A at learning, and the processing of the image conversion for the learning image presented as step S 1002 in Fig. 3A. Thus, the following description will be given focusing on the differences from the first embodiment.

Noise of an image sensor represented by a complementary metal oxide semiconductor (CMOS) sensor includes three main elements: shot noise caused by quantum fluctuation of photons entering pixels (photodiodes) of the sensor, readout noise when electric charges converted by the pixels are converted into voltages, and a dark current caused by insulation failure of a semiconductor element or the like.

In the Poisson-Gaussian noise, the shot noise is approximated by a Gaussian distribution having a variance proportional to the magnitude of a signal, and the readout noise and the dark current are represented by a Gaussian distribution having variances independent of a signal, and modeling is performed using one Gaussian distribution having these two kinds of variances.

Thus, the noise increases in proportion to the magnitude of the signal. However, the noise has a constant magnitude even when the signal is zero.

The proportionality constant of the noise variance to the signal depends on the sensitivity (gain) of the sensor. That is, when an image is captured with high sensitivity, noise increases in proportion to the sensitivity, and the noise model is modeled for each sensor sensitivity.

An example of a specific form of the conversion control unit 1001 (hereinafter, also referred to as a conversion control unit 1060) that executes the processing in steps S1001 and S1002 of Fig. 3A will be described with reference to Fig. 4C.

In the present embodiment, in step S1001 of Fig. 3A, a control unit 1061 sets the sensitivity of the sensor as the noise level. In the case of low sensitivity (for example, ISO 100, which is defined by the International Organization for Standardization (ISO), or a gain of 6 dB), it can be said that the noise is sufficiently small and the NR by the machine learning model is unnecessary. In view of such characteristics, in the present embodiment, sensitivities of a certain degree or more are determined as a NR application range, and in the learning of the NR effect-enhanced model, the sensitivity of the NR application range is set as the level of the image conversion.

Here, when the sensitivity of the NR application range is set to three stages of sensitivity 1, sensitivity 2, and sensitivity 3, an example of the level and the occurrence frequency set in the NR effect-enhanced model is as follows.
· Level: [no noise, sensitivity 1, sensitivity 2, sensitivity 3]
· Occurrence frequency: [0.0, 1.0, 2.0, 3.0]

However, it is assumed that the occurrence frequency is normalized so that the sum is 1.0.

In contrast, in the sharpness-enhanced model, the NR is not applied, and sensitivity with a sufficiently small noise level is set. Here, the sufficiently small noise level may include "no noise". An example of the level and the occurrence frequency set in the sharpness-enhanced model is as follows.
· Level: [no noise, sensitivity 1, sensitivity 2, sensitivity 3]
· Occurrence frequency: [1.0, 1.0, 2.0, 3.0]

In step S1002 of Fig. 3A, each of a conversion A processing unit 1062, a conversion B processing unit 1063, and a conversion C processing unit 1064 sequentially performs a conversion process on a learning image. In the present embodiment, it is assumed that an RGB image is stored as the learning image in the dataset. The RGB image is converted into a RAW image of a Bayer array by the reverse process of development processing, and the RAW image is subjected to noise addition with the Poisson-Gaussian noise. Then, development processing is performed on the RAW image subjected to the noise addition, and hence an RGB image regarding the actual noise is created. In the above process, it is assumed that the conversion A processing unit 1062 performs the reverse development processing from the RGB image to the RAW image, the conversion B processing unit 1063 performs the noise addition to the RAW image, and the conversion C processing unit 1064 performs the development processing from the RAW image to the RGB image.

It is assumed that the reverse development processing includes reverse gamma correction, reverse white balance correction, and processing of thinning out an RGB image of three channels to create a Bayer image with an RGGB array of one channel or the like.

It is assumed that the development processing includes de-Bayer processing of interpolating a Bayer image to create RGB of three channels, white balance correction, and gamma correction.

In the noise addition, noise is generated based on a Poisson-Gaussian noise model based on the level and the occurrence frequency of the conversion processes set in step S 1001 or Fig. 3A, and the noise is added to the RAW image. In the Poisson-Gaussian noise, the noise term independent of the magnitude of the signal has a finite value even when the sensitivity is 0 dB. Thus, even in the case of 0 dB, an image normally includes noise. In the case of "no noise", since it is necessary to create an image with no noise, a path in which the noise addition by the conversion B processing unit 1063 is skipped is used on the pipeline of the series of processing.

The reverse development processing from the RGB image to the RAW image by the conversion A processing unit 1062 corresponds to an example of a third conversion process. The development processing from the RAW image to the RGB image by the conversion C processing unit 1064 corresponds to an example of a fourth conversion process.

The processing at learning and the processing at runtime other than the processing in steps S1001 and S 1002 are substantially the same as those in the above-described first embodiment, and hence the detailed description thereof will be omitted.

By applying the control as described above, when the conversion processes are performed on a learning image, the processing of the reverse development and the development is applied to the learning image. Specifically, the Bayer image is created by thinning out the RGB image by the reverse development, and the Bayer is interpolated by the de-Bayer processing in the development to create the RGB image. Thus, the converted image to be input to the model is an image smoothed compared to the GT image. That is, since the image is smoothed by the de-Bayer, additional processing for smoothing by a Gaussian filter or the like may be omitted in the present embodiment.

In an image with noise added at a series of sensitivities including 0 dB, degradation due to noise and degradation due to smoothing in the development processing (de-Bayer) occur simultaneously, and the degradation due to noise becomes dominant as the sensitivity increases. In addition, in the case of "no noise", since there is no degradation due to noise, degradation due to only smoothing derived from the de-Bayer processing in the development processing occurs in the image.

In learning of a high sensitivity region, since learning is performed so as to recover an image in which degradation due to noise is dominant as a degradation factor to an image before degradation, NR is strongly learned. In learning of a sufficiently low sensitivity region including "no noise", learning of recovering sharpness, that is, learning of enhancing sharpness is performed. Then, the control unit 1061 adjusts the occurrence frequency of "no noise" or sufficiently low sensitivity, and hence it is possible to control the occurrence frequency of the sharpness enhancement learning.

When the learning of the model has been sufficiently performed, the image quality tendency generated by the model is generalized, and the model subjected to the sharpness enhancement learning becomes a model having high sharpness without depending on the sensitivity.

By applying the control as described above, it is possible to easily control the sharpness of the model without requiring additional calculation such as a loss function or edge detection in the learning of the noise reduction processing with regard to the occurrence mechanism of noise degradation in the actual image capturing device.

### Other Embodiments

The present disclosure can also be implemented by processing in which a program for implementing one or more functions of the above-described embodiments is supplied to a system or an apparatus via a network or a storage medium, and one or more processors in a computer of the system or the apparatus read and execute the program. The present disclosure can also be implemented by circuitry (for example, an ASIC) that implements one or more functions.

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

While the present invention has been described with reference to embodiments, it is to be understood that the invention is not limited to the disclosed embodiments. The scope of the following claims is to be accorded the broadest interpretation so as to encompass all such modifications and equivalent structures and functions. Each of the embodiments of the present disclosure can be implemented solely or as a combination of a plurality of the embodiments. Each feature or element of each embodiment of the present disclosure can be implemented as a combination of features or elements in a single embodiment.

## Claims

1. A learning apparatus (1000, 2000, 3000) comprising:
conversion control means (1001, 1010, 1020, 1030, 1060, 2001, 3001) configured to control an occurrence frequency depending on a level of a first conversion process, the level of which is controllable, as a subject included in one or more conversion processes to be performed on a first image for learning;
model processing means (1002, 2002, 3002) configured to input a second image obtained by performing the one or more conversion processes on the first image to a model trained based on machine learning and cause the model to output a third image obtained by performing image processing on the second image;
loss calculation means (1003, 2003, 3003) configured to calculate a loss between the third image and the first image; and
update means (1004, 2004, 3004) configured to update the model based on the loss calculated by the loss calculation means (1003, 2003, 3003),
wherein a plurality of models having different image quality characteristics of the image processing to be performed on an input image are generated, the models being trained, for each combination of the level and the occurrence frequency, based on the first image and the second image corresponding to the combination, and
wherein a model corresponding to a designated image quality characteristic included in the plurality of models is applied to an image processing apparatus (1100, 2100, 3100) that performs the image processing on the input image.

2. The learning apparatus according to Claim 1,
wherein the first conversion process is processing of modeling degradation generated in an image when the image is acquired in accordance with an image capturing result by an image capturing device, and
wherein the level indicates an intensity of the degradation.

3. The learning apparatus according to Claim 1 or 2, wherein the conversion control means sets an occurrence frequency higher than 0 for the level at which a result of the first conversion process is not subjected to the image processing by the model.

4. The learning apparatus according to any one of Claims 1 to 3, wherein the conversion control means controls the occurrence frequency depending on the level of the first conversion process as the subject based on an evaluation value calculated in accordance with a physical quantity of the first image.

5. The learning apparatus according to any one of Claims 1 to 4, wherein the first conversion process is processing of adding at least one of noise generated at image capturing by an image capturing device and degradation due to atmospheric fluctuation, to the first image.

6. An image processing apparatus (1100, 2100, 3100) comprising:
selection means (1102, 2102, 3102) configured to select one of a plurality of models trained based on machine learning to have different image quality characteristics of image processing to be performed on an input image, based on the image quality characteristic of the model;
model processing means (1103, 1040, 1050, 2103, 3103) configured to input a subject image to the model selected by the selection means (1102, 2102, 3102) and cause the model to perform the image processing on the subject image; and
output means (1104, 2104, 3104) configured to output an image subjected to the image processing by the model,
wherein the plurality of models are generated such that
control of an occurrence frequency depending on a level is performed on a first conversion process, the level of which is controllable, as a subject included in one or more conversion processes to be performed on a first image for learning,
a second image obtained by performing the one or more conversion processes on the first image is input to a model of a learning subject, and the model of the learning subject is caused to output a third image obtained by performing the image processing on the second image,
the model of the learning subject is updated based on a loss between the third image and the first image, and
the plurality of models are generated depending on a combination of the level and the occurrence frequency.

7. The image processing apparatus according to Claim 6, wherein the model processing means inputs the subject image to the model selected by the selection means and causes the model to perform the image processing on the subject image when a level of degradation of the subject image is a threshold or more.

8. The image processing apparatus according to Claim 6 or 7, comprising:
reception means configured to receive selection of an option associated with the image quality characteristic from a user,
wherein the selection means selects a model corresponding to the image quality characteristic associated with the option, the selection of which has been received by the reception means from the user, from among the plurality of models.

9. The image processing apparatus according to Claim 8, wherein the level related to learning of each of the plurality of models is set in association with an image quality characteristic corresponding to each of a series of options, the selection of which is receivable by the reception means from the user.

10. The image processing apparatus according to any one of Claims 6 to 9, comprising:
detection means configured to detect an object to be detected from the subject image,
wherein the selection means selects one of the plurality of models in accordance with an image quality characteristic indicated by a detection result of the object by the detection means.

11. The image processing apparatus according to Claim 10, wherein the selection means switches the model while providing hysteresis for a temporal detection frequency of the object by the detection means.

12. A method of controlling a learning apparatus (1000, 2000, 3000), the method comprising:
a conversion control step (S1002, S3003, S3008) of controlling an occurrence frequency depending on a level of a first conversion process, the level of which is controllable, as a subject included in one or more conversion processes to be performed on a first image for learning;
a model processing step (S1003, S3004, S3009) of inputting a second image obtained by performing the one or more conversion processes on the first image to a model trained based on machine learning and causing the model to output a third image obtained by performing image processing on the second image;
a loss calculation step (S1004, S3010) of calculating a loss between the third image and the first image; and
an update step (S1005, S3011) of updating the model based on the loss calculated in the loss calculation step (S1004, S3010),
wherein a plurality of models having different image quality characteristics of the image processing to be performed on an input image are generated, the models being trained, for each combination of the level and the occurrence frequency, based on the first image and the second image corresponding to the combination, and
wherein a model corresponding to a designated image quality characteristic included in the plurality of models is applied to an image processing apparatus (1100, 2100, 3100) that performs the image processing on the input image.

13. A method of controlling an image processing apparatus (1100, 2100, 3100), the method comprising:
a selection step (S1102, S1202, S3103) of selecting one of a plurality of models trained based on machine learning to have different image quality characteristics of image processing to be performed on an input image, based on the image quality characteristic of the model;
a model processing step (S1103, S1204, S3104) of inputting a subject image to the model selected in the selection step (S1102, S1202, S3103) and causing the model to perform the image processing on the subject image; and
an output step (S1104, S1205, S3105) of outputting an image subjected to the image processing by the model,
wherein the plurality of models are generated such that
control of an occurrence frequency depending on a level is performed on a first conversion process, the level of which is controllable, as a subject included in one or more conversion processes to be performed on a first image for learning,
a second image obtained by performing the one or more conversion processes on the first image is input to a model of a learning subject, and the model of the learning subject is caused to output a third image obtained by performing the image processing on the second image,
the model of the learning subject is updated based on a loss between the third image and the first image, and
the plurality of models are generated depending on a combination of the level and the occurrence frequency.

14. A computer program comprising instructions which, when executed by a computer, causes the computer to perform the method according to claim 12.

15. A computer program comprising instructions which, when executed by a computer, causes the computer to perform a method according to claim 13.
